# EUROPEAN PATENT APPLICATION

(11) **EP 1 983 774 A1**
(43) Date of publication of application: **22.10.2008**
(21) Application number: 07707912.7
(22) Date of filing: 01.02.2007
(51) Int. Cl.: H04Q 7/22, H04Q 7/38

(54) **MOBILE COMMUNICATION SYSTEM, BASE STATION CONTROL DEVICE, MOBILE DEVICE, HANDOVER CONTROL METHOD, AND PROGRAM**

(30) Priority: 06.02.2006 JP 2006027890
(60) Divisional application: 08162173.2
(71) Applicant: NEC Corporation, Minato-ku Tokyo 108-8001 (JP)
(72) Inventor: NAKAJIMA, Taketoshi, Tokyo 108-8001 (JP)
(74) Representative: Betten & Resch
(86) International application number: PCT/JP2007/051726
(87) International publication number: WO 2007/091482

(57) **Abstract**

The present invention provides a mobile communication system which can perform handover without deleting user data in an HSDPS system.

In the handover in a mobile device 1, an RNC 4 makes a Node-B3 as a handover destination establish an HS-DSCH (step S213) to send the same user data respectively from the Node-B2 as a handover source and the Node-B3 as a handover destination to the mobile device 1 with the use of the HS-DSCH (steps S219 to S226). The mobile device 1 restores the user data on the basis of data which can be received before and after an HS-DSCH switching operation (step 5215).

## Description

### TECHNICAL FIELD

The present invention relates to a mobile communication system, a base station controller, a mobile device, a handover control method, and a program, and specifically relates to a mobile communication system using an HSDPA (High Speed Downlink Packet Access) system.

### BACKGROUND ART

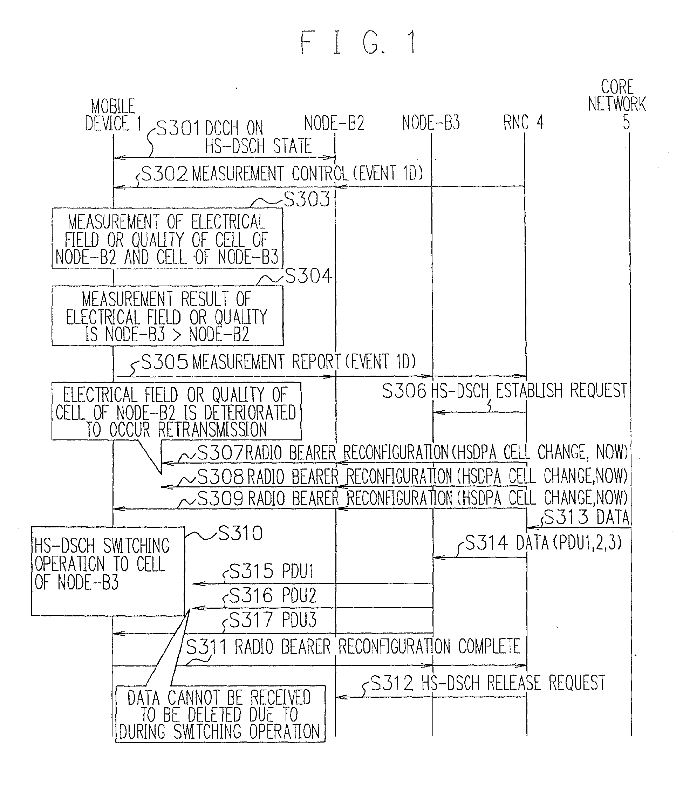

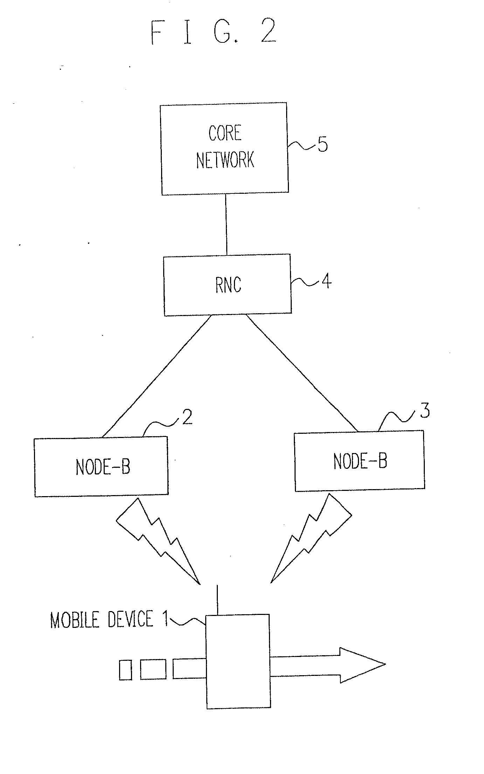

FIG. 1 is a sequence view showing an operation at the time of handover in the mobile communication system using the HSDPA system in the conventional art. FIG. 2 shows a configuration of a mobile communication system according to an exemplary embodiment of the present invention. Since the configuration of the mobile communication system in the present invention is the same as that of the mobile communication system in the conventional art, the operation at the time of handover in the mobile communication system in the conventional art is described hereinafter with reference to FIGS. 1 and 2.

In FIGS. 1 and 2, a mobile device 1 is in a state of moving at high speed from a cell of a Node-B2 toward a cell of a Node-B3, and is supposed to have a real time communication with the Node-B2 by the HSDPA system.

In a step S301, data is transmitted from the Node-B2 to the mobile device 1 with the use of an HS-DSCH (High Speed-Downlink Shared Channel). For the purpose of saving resource of a DCH (Dedicated Channel), not only user data but also a control signal is supposed to be sent from the Node-B2 to the mobile device 1 with the use of the HS-DSCH. In other words, usually, the control signal to be sent to the mobile device 1 with the use of a DCCH (Dedicated Control Channel) of the DCH is supposed to be transmitted from the Node-B2 to the mobile device 1 in a "DCCH on HS-DSCH" state where the control signal is mapped on the HS-DSCH to be sent.

In order to make the mobile device 1, which is in the "DCCH on HS-DSCH" state, start measurement of an Event 1D (event at the time when a cell (best cell) with the highest electrical field or the highest quality is changed), an RNC (Radio Network Controller) 4 sends a "Measurement Control (Event 1D)" message through the Node-B2 (step S302).

The mobile device 1 measures the electrical field (for example, RSCP (Received Signal Code Power) or the quality (for example, Ec/No (The received energy per chip divided by the power density in the band) of the cells of the Node-B2 and the Node-B3, that is, measures the electrical field or the quality of a CPICH (Common Pilot Channel) in each cell (step S303).

When the mobile device 1 detects that the electrical field or the quality of the Node-B3 is higher than that of the Node-B2 (step S304), the mobile device 1 sends a "Measurement Report (Event 1D)" message to the RNC 4 (step S305).

In response to the occurrence of the Event 1D, the RNC 4 issues an HS-DSCH establish request to the Node-B3 to make the Node-B3 establish the HS-DSCH (step S306), and, in addition, the RNC 4 sends a "Radio bearer reconfiguration" message, that requests a change of the cell communicating with the mobile device 1 with the use of the HS-DSCH, to the mobile device 1 through the Node-B2 in a state of Activation Time = Now (steps S307 to S309).

The mobile device 1 immediately performs a switching operation of the HS-DSCH from the cell of the Node-B2 to the cell of the Node-B3 (step S310) to send a "Radio bearer reconfiguration complete" message to the RNC 4 (step S311). The RNC 4 sends a HS-DSCH release request to the Node-B2 (step S312), whereby the Node-B2 releases the HS-DSCH.

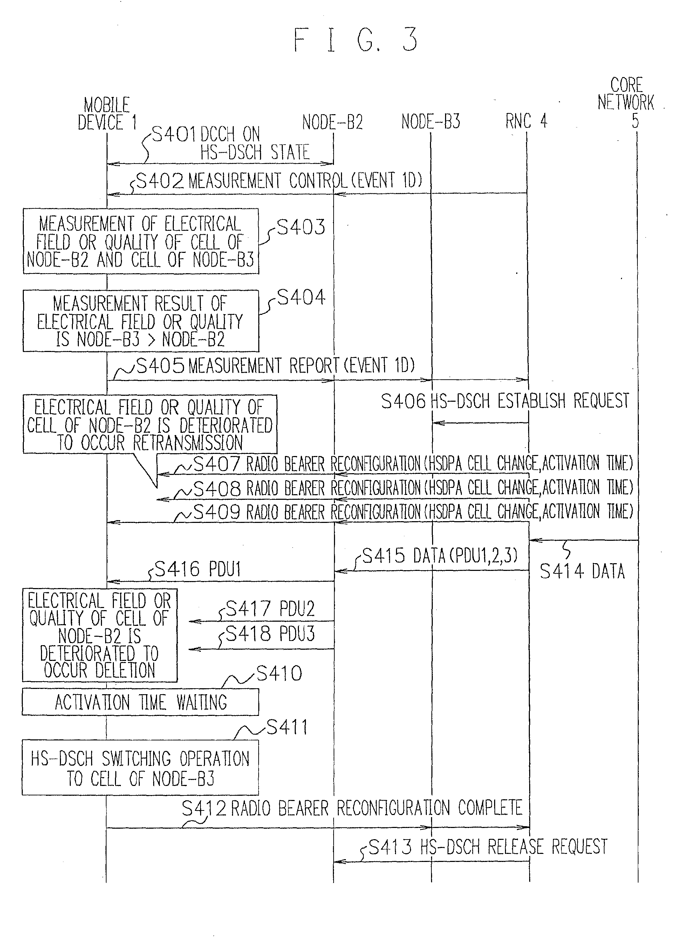

FIG. 3 is a sequence view showing another operation example at the time of handover in the mobile communication system using the HSDPA system in the conventional art. Although FIG. 1 shows the method without performing waiting synchronous processing based on the Activation Time in the switching of the HS-DSCH, FIG. 3 shows a method performing the synchronous processing. In FIG. 3, as in the case of FIG. 1, the mobile device 1 is in the state of moving at high speed from the cell of the Node-B2 toward the cell of the Node-B3, and is supposed to have the real time communication with the Node-B2 by the HSDPA system. In addition, since the processing operation from the steps S401 to S406 in FIG. 3 is the same as that from the steps 301 to S306 in FIG. 1, the description of the processing operation is not repeated.

In response to the occurrence of the Event 1D, the RNC 4 issues the HS-DSCH establish request to the Node-B3 to make the Node-B3 establish the HS-DSCH (step S406), and, in addition, the RNC 4 sends the "Radio bearer reconfiguration" message, that requests a change of the cell communicating with the mobile device 1 with the use of the HS-DSCH and includes the Activation Time, to the mobile device 1 through the Node-B2 (steps S407 to S409).

The mobile device 1 performs the switching operation of the HS-DSCH from the cell of the Node-B2 to the cell of the Node-B3 at the Activation Time (steps S410 and S411) to send the "Radio bearer reconfiguration complete" message to the RNC 4 (step S412). The RNC 4 sends the HS-DSCH release request to the Node-B2 (step S413), whereby the Node-B2 releases the HS-DSCH.

The above described operation in the conventional art is described in the following Non-patent Documents 1 and 2.

Non-patent Document 1: 3GPP TS 25.331 V3. 21. 0, 14. 1. 2. 4 Reporting event 1D: Change of best cell, December 2004
Non-patent Document 2: 3GPP TS 25. 308 V5. 7. 0, 9. 3 Intra-Node B synchronized serving HS-DSCH cell Change, December 2004

### DISCLOSURE OF INVENTION

### PROBLEMS TO BE RESOLVED BY THE INVENTION

In the HSDPA system, a mobile device can communicate with only one cell at one time. In FIGS. 1 and 3, since the mobile device is always in the "DCCH on HS-DSCH" state where a control signal is mapped on the HS-DSCH to be sent, the service come to be continued with a cell having a quality deteriorated due to the time taken for the handover. Therefore, in the steps S307 and S308 of FIG. 1 and the steps S407 and S408 of FIG. 3, the control message (handover message) such as the "Radio bearer reconfiguration" message is deleted, whereby the time from the detection of the best cell to the actual start of the switching operation of the HS-DSCH becomes longer.

Especially, in the example in which the waiting synchronous processing based on the Activation Time of FIG. 3 is performed, additional time to reach the Activation Time is taken, whereby the mobile device comes to continue the communication with the cell having a lowered electrical field or quality to cause deletion of data (steps S417 and S418).

In the example without performing the synchronous processing of FIG. 1, although the time from the sending of the "Radio bearer reconfiguration" message to the switching of the HS-DSCH becomes shorter, since the timing of the switching cannot be determined, the deletion of data occurs until the switching is completed (steps S315 and S316). Especially, the data deletion time becomes longer during repetition of sending the "Radio bearer reconfiguration" message.

A first exemplary object of the present invention is to provide a mobile communication system, a base station controller, a mobile device, a handover control method, and a program which can perform handover without deleting user data in the HSDPA system.

A second exemplary object of the present invention is to provide a mobile communication system, a base station controller, a mobile device, a handover control method and a program, which can perform handover without deleting the control message when the control message is mapped on the HS-DSCH to be sent to the mobile device in the HSDPA system.

### MEANS FOR SOLVING THE PROBLEM

In a mobile communication system according to the present invention, data transmission from a base station to a mobile device is performed with the use of an HS-DSCH (High Speed-Downlink Shared Channel), and the mobile communication system is characterized by including control means that, in a handover in the mobile device, makes a base station as a handover destination establish the HS-DSCH to instruct the mobile device to perform the switching of the HS-DSCH from a base station as a handover source to the base station as a handover destination, and, thus, to send the same data from the base station as a handover source and the base station as a handover destination to the mobile device with the use of the HS-DSCH respectively.

In another mobile communication system according to the present invention, data transmission from a base station to a mobile device is performed with the use of an HS-DSCH (High Speed-Downlink Shared Channel), and the HS-DSCH is used also in the sending of a control message from the base station to the mobile device. The mobile communication system is characterized by including control means that stops the use of the HS-DSCH in the sending of the control message from a base station as a handover source to the mobile device beforehand, before the occurrence of handover in the mobile device, to control the base station as a handover source and the base station as a handover destination so as to make these base stations respectively establish a dedicated channel used for sending the control message to the mobile device.

In a base station controller for a mobile communication system according to the present invention, the mobile communication system performs data transmission from a base station to a mobile device with the use of an HS-DSCH (High Speed-Downlink Shared Channel). The base station controller is characterized by including control means that, in a handover in the mobile device, makes a base station as a handover destination establish the HS-DSCH to instruct the mobile device to perform the switching of the HS-DSCH from a base station as a handover source to the base station as a handover destination, and, thus, to send the same data from the base station as a handover source and the base station as a handover destination to the mobile device with the use of the HS-DSCH respectively.

In another base station controller for a mobile communication system according to the present invention, the mobile communication system performs data transmission from a base station to a mobile device with the use of an HS-DSCH (High Speed-Downlink Shared Channel) and uses the HS-DSCH also in the sending of a control message from the base station to the mobile device. The base station controller is characterized by including control means that stops the use of the HS-DSCH in the sending of the control message from a base station as a handover source to the mobile device beforehand, before the occurrence of handover in the mobile device, to control the base station as a handover source and a base station as a handover destination so as to make these base stations respectively establish a dedicated channel used for sending the control message to the mobile device.

In a mobile device for a mobile communication system according to the present invention, the mobile communication system performs data transmission from a base station to a mobile device with the use of an HS-DSCH (High Speed-Downlink Shared Channel) and includes control means that, in a handover in the mobile device, makes a base station as a handover destination establish the HS-DSCH to send the same data from a base station as a handover source and the base station as a handover destination to the mobile device with the use of the HS-DSCH respectively. The mobile device is characterized by switching the HS-DSCH from the HS-DSCH of the base station as a handover source to the HS-DSCH of the base station as a handover destination in the handover in its own device to perform data restoration on the basis of data respectively received from the base station as a handover source and the base station as a handover destination before and after the HS-DSCH switching.

In another mobile device for a mobile communication system according to the present invention, the mobile communication system performs data transmission from a base station to a mobile device with the use of an HS-DSCH (High Speed-Downlink Shared Channel) and uses the HS-DSCH also in the sending of a control message from the base station to the mobile device. The mobile communication system includes control means that, in response to a notification from the mobile device, stops the use of the HS-DSCH in the sending of the control message from a base station as a handover source to the mobile device beforehand, before the occurrence of handover in the mobile device, to control the base station as a handover source and a base station as a handover destination so as to make these base stations respectively establish a dedicated channel used for sending the control message to the mobile device. The mobile device is characterized by detecting a base station, which sends a signal having a reception quality or an electrical field strength in a predetermined range for a reception quality or an electrical field strength of a signal from the base station as a handover source, to perform the notification.

In a handover control method in a mobile communication system according to the present invention, the mobile communication system performs data transmission from a base station to a mobile device with the use of an HS-DSCH (High Speed-Downlink Shared Channel). The handover control method is characterized by including a control step which, in a handover in the mobile device, makes a base station as a handover destination establish the HS-DSCH to instruct the mobile device to perform the switching of the HS-DSCH from a base station as a handover source to the base station as a handover destination, and, thus, to send the same data from the base station as a handover source and the base station as a handover destination to the mobile device with the use of the HS-DSCH respectively.

In another handover control method in a mobile communication system according to the present invention, the mobile communication system performs data transmission from a base station to a mobile device with the use of an HS-DSCH (High Speed-Downlink Shared Channel) and uses the HS-DSCH also in the sending of a control message from the base station to the mobile device. The handover control method is characterized by including a control step which stops the use of the HS-DSCH in the sending of the control message from a base station as a handover source to the mobile device beforehand, before the occurrence of handover in the mobile device, to control the base station as a handover source and the base station as a handover destination so as to make these base stations respectively establish a dedicated channel used for sending the control message to the mobile device.

In a program for making a computer execute a handover control method in a base station controller for a mobile communication system according to the present invention, the mobile communication system performs data transmission from a base station to a mobile device with the use of an HS-DSCH (High Speed-Downlink Shared Channel). The program is characterized by including processing that, in a handover in the mobile device, makes a base station as a handover destination establish the HS-DSCH to instruct the mobile device to perform the switching of the HS-DSCH from a base station as a handover source to the base station as a handover destination, and, thus, to send the same data from the base station as a handover source and the base station as a handover destination to the mobile device with the use of the HS-DSCH respectively.

In another program for making a computer execute a handover control method in a base station controller for a mobile communication system according to the present invention, the mobile communication system performs data transmission from a base station to a mobile device with the use of an HS-DSCH (High Speed-Downlink Shared Channel) and uses the HS-DSCH also in the sending of a control message from the base station to the mobile device. The program is characterized by including processing that stops the use of the HS-DSCH in the sending of the control message from a base station as a handover source to the mobile device beforehand, before the occurrence of handover in the mobile device, to make the base station as a handover source and a base station as a handover destination respectively establish a dedicated channel used for sending the control message to the mobile device.

In still another program for making a computer execute a handover control method in a mobile device for a mobile communication system according to the present invention, the mobile communication system performs data transmission from a base station to a mobile device with the use of an HS-DSCH (High Speed-Downlink Shared Channel) and includes control means that, in a handover in the mobile device, makes a base station as a handover destination establish the HS-DSCH to send the same data from a base station as a handover source and the base station as a handover destination to the mobile device with the use of the HS-DSCH respectively. The program is characterized by including processing that, in the handover in its own device, switches from the HS-DSCH of the base station as a handover source to the HS-DSCH of the base station as a handover destination to perform data restoration on the basis of data respectively received from the base station as a handover source and the base station as a handover destination before and after the HS-DSCH switching.

In still further another program for making a computer execute a handover control method in a mobile device for a mobile communication system according to the present invention, the mobile communication system performs data transmission from a base station to a mobile device with the use of an HS-DSCH (High Speed-Downlink Shared Channel) and uses the HS-DSCH also in the sending of a control message from the base station to the mobile device. The mobile communication system includes control means that, in response to a notification from the mobile device, stops the use of the HS-DSCH in the sending of the control message from a base station as a handover source to the mobile device beforehand, before the occurrence of handover in the mobile device, to control the base station as a handover source and a base station as a handover destination so as to make these base stations respectively establish a dedicated channel used for sending the control message to the mobile device. The program is characterized by including processing that detects a base station, which sends a signal having a reception quality or an electrical field strength in a predetermined range for a reception quality or an electrical field strength of a signal from the base station as a handover source, to perform the notification.

In the present invention, in the handover in the mobile device which receives data from the base station as a handover source with the use of the HS-DSCH, the base station controller establishes the HS-DSCH also in the base station as a handover destination to send the same data from the base station as a handover source and the base station as a handover destination to the mobile device with the use of the HS-DSHC respectively, and, thus, to instruct the mobile device to perform the switching of the HS-DSCH in the base station as a handover destination for the data reception.

Further, in the present invention, in addition to the data reception from the base station as a handover source with the use of the HS-DSCH, the base station controller releases beforehand a "DCCH on HS-DSCH" state, where the control message is also received using the HS-DSCH, before the occurrence of handover in the mobile device, which is in the "DCCH on HS-DSCH" state, to establish a "DCCH on DCH" state where the control message is sent from the base station as a handover source and the base station as a handover destination to the mobile device with the use of each dedicated channel.

### EFFECT OF THE INVENTION

According to the present invention, in the handover in the mobile device, the same data is transmitted respectively from the base station as a handover source and the base station as a handover destination to the mobile device with the use of the HD-DSCH, whereby the handover can be performed without deleting the user data in the HSDPA system.

In addition, according to the present invention, since the switching from the "DCCH on HS-DSCH" state to the "DCCH on DCH" state is performed beforehand before the occurrence of the handover in the mobile device, the handover can be performed without deleting the control message in the HSDPA system.

### BEST MODE FOR CARRYING OUT THE INVENTION

Hereinafter, an exemplary embodiment of the present invention is described with reference to the drawings.

FIG. 2 shows a configuration of a mobile communication system using the HSDPA system according to the exemplary embodiment of the present invention. The system configuration of this exemplary embodiment is a general configuration of W-CDMA (Wideband-Code Division Multiple Access) system network specified by 3GPP (3rd Generation Partnership Project) and is including a mobile device 1, a Node-B2, a Node-B3, an RNC 4, and a CN (Core Network) 5.

In FIG. 2, the mobile device 1 is a W-CDMA system mobile phone and corresponds to the HSDPA system, whereby the mobile device can access the Node-B2 and the Node-B3. In this exemplary embodiment, the mobile device 1 is supposed to be moving at high speed from the cell under the Node-B2 toward the cell under the Node-B3. The Node-B2 and the Node-B3 are base station controllers, which control a W-CDMA system Layer 1/ MAC (Medium Access control) Layer, and correspond to the HSDPA system. The Node-B2 and the Node-B3 are respectively connected to the RNC 4 with wire.

The RNC 4 is a base station controller which controls RRC (Radio Resource Control)/ RLC (Radio Link Control) of the W-CDMA system and is connected to the CN 5 with wire. The CN 5 is a switching device used for movement management and call control and is connected to other switching devices and external networks (including telephone lines and the Internet or the like).

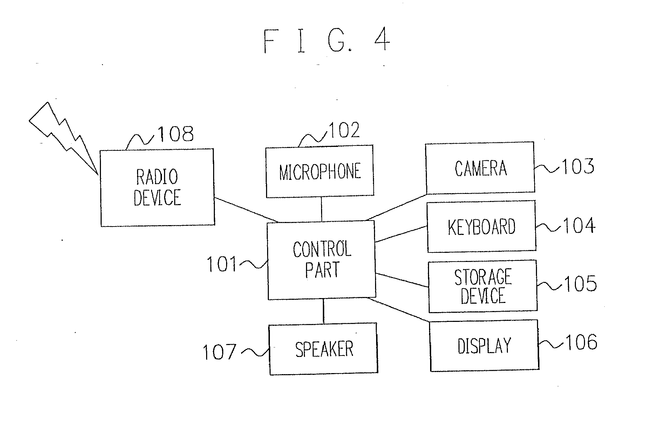

FIG. 4 shows a configuration of the mobile device 1 of FIG. 2. The configuration of the mobile device 1 is a general configuration of a mobile phone corresponding to the W-CDMA system and is including a control part 101, a microphone 102, a camera 103, a keyboard 104, a storage device 105, a display 106, a speaker 107, and a radio device 108.

In FIG. 4, the control part 101 is a device such as a CPU (Central Processing Unit) which controls the microphone 102, the camera 103, the keyboard 104, the storage device 105, the display 106, the speaker 107, and the radio device 108, and also performs a higher order control than the MAC Layer, such as the RRC, the RLC, the movement management and the call control. The microphone 102 is used for voice input. The camera 103 is used for image input. The keyboard 104 is used for input from a user.

The storage device 105 is a memory such as a ROM and a RAM used in the control part 101. The display 106 is a device such as an LCD which displays an image. The speaker 107 is used for voice output. The radio device 108 inputs and outputs a wireless signal of the W-CDMA system, takes charge of the layer 1 and the MAC Layer, and can communicate with the Node-B2 and the Node-B3 respectively. With regard to the DCH, the radio device 108 can communicate with plural cells at the same time, while with regard to the DSCH of the HSDPA system, the radio device 108 can communicate with only one cell.

The configuration of this exemplary embodiment has been described above, where each configuration of the Node-B2, Node-B3, RNC 4, and CN 5 of FIG. 2 is well known to those skilled in the art. In addition, since the RNC 4 is a general server, the detailed explanation about the configuration of the RNC 4 is not described.

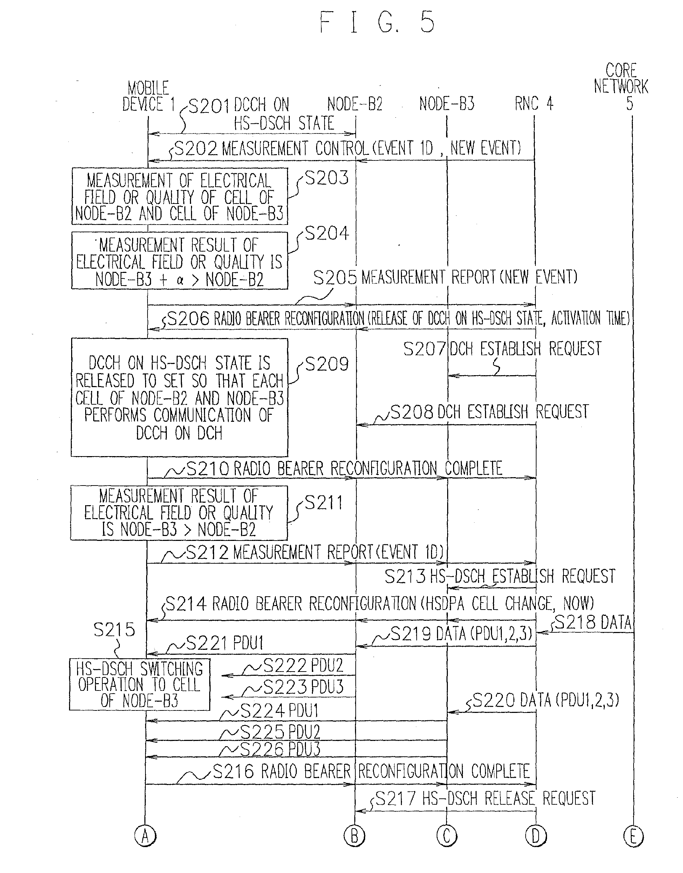

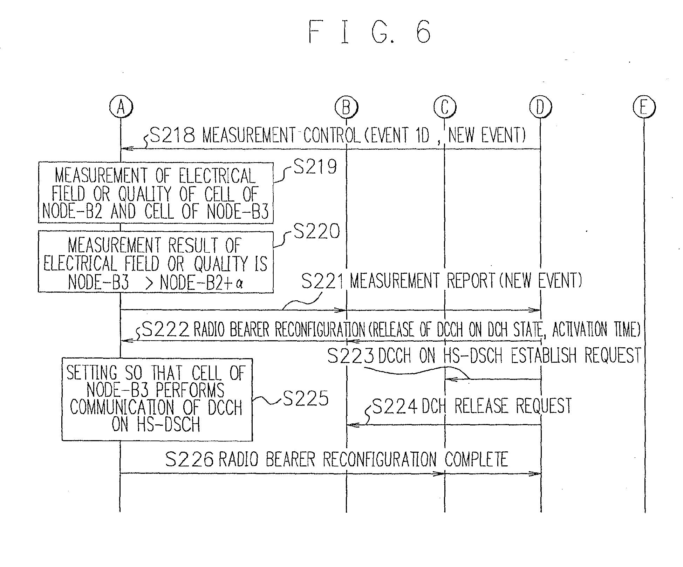

FIGS. 5 and 6 are sequence views showing the operation at the handover in the mobile communication system of FIG. 2. The operation of the mobile communication system according to the exemplary embodiment of the present invention is described hereinafter with reference to FIGS. 5 and 6. In FIGS. 5 and 6, the mobile device 1 is in the state of moving at high speed from the cell of Node-B2 toward the cell of Node-B3, and is supposed to perform a real-time communication with the Node-B2 by the HSDPA system.

In a step S201, data transmission is performed from the Node-B2 to the mobile device 1 with the use of the HS-DSCH. For the purpose of saving resource of the DCH, not only user data but also a control signal is supposed to be sent from the Node-B2 to the mobile device 1 with the use of the HS-DSCH. In other words, usually, the control signal to be sent to the mobile device 1 with the use of the DCCH of the DCH is supposed to be sent from the Node-B2 to the mobile device 1 in the "DCCH on HS-DSCH" state where the control signal is mapped on the HS-DSCH to be sent.

The RNC 4 sends a "Measurement Control (Event 1D, new event)" message to the mobile device 1, which is in the "DCCH on HS-DSCH" state, through the Node-B2 (step S202) in order to make the mobile device 1 start measurement of the new event in addition to the normal Event 1D (event at the time when a cell (best cell) with the highest electrical field or the highest quality is changed). The new event is defined as the event generated at the time when a cell having the electrical field or quality in the range within a certain value (defined as α) for the cell having the highest electrical field or the highest quality.

The mobile device 1 starts the measurement of the electrical field (for example, RSCP) or the quality (for example, Ec/No) of the cells of Node-B2 and Node-B3 (step S203). When the mobile device 1 detects that the electrical field or the quality of the Node-B3 + α is higher than that of the Node-B2 (step S204), that is, the electrical field or the quality of the pilot signal of the CPICH from the Node-B3 becomes higher enough that the electrical field or the quality of a pilot signal of the CPICH from the Node-B3 becomes within a predetermined range for the electrical field or the quality of the pilot signal of the CPICH from the Node-B2, whereby the mobile device 1 sends a "Measurement Report(new event)" message to the RNC 4 (step S205).

In response to the occurrence of the new event, the RNC 4 sends a "Radio bearer reconfiguration" message, that releases the "DCCH on HS-DSCH" state and includes the Activation Time, to the mobile device 1 through the Node-B2 (step S206). At the same time, the RNC 4 sends a DCH establish request to the Node-B3 and the Node-B2 (steps S207 and S208), whereby the Node-B2 and the Node-B3 release the "DCCH on HS-DSCH" state at the Activation Time to respectively establish the DCH for the DCCH used for sending the control message to the mobile device 1.

The mobile device 1 also releases the "DCCH on HS-DSCH" state at the Activation Time to perform setting so that the control message is received from the Node-B2 and the Node-B3 with the use of the DCH (step S209). Thus, thereafter, each control message to be sent from the Node-B2 and the Node-B3 to the mobile device 1 is sent not on the HS-DSCH but on the DCH ("DCCH on DCH" state), and the mobile device 1 uses macro-diversity to allow simultaneous communication with the Node-B2 and the Node-B3.

When the switching from the "DCCH on HS-DSCH" state to the "DCCH on DCH" is completed, the mobile device 1 sends the "Radio bearer reconfiguration complete" message to the RNC 4 (step S210).

Then, when the mobile device 1 detects that the electrical field or the quality of the Node-B3 is higher than that of the Node-B2 (step S211), that is, when the electrical field or the quality of the pilot signal of the CPICH from the Node-B3 is higher than that of the pilot signal of the CPICH from the Node-B2, the mobile device 1 sends the "Measurement Report (Event 1D)" message to the RNC 4 (step S212).

In response to the occurrence of the Event 1D, the RNC 4 issues the HS-DSCH establish request to the Node-B3 to make the Node-B3 establish the HS-DSCH (step S213), and, in addition, the RNC 4 sends the "Radio bearer reconfiguration" message, that requests a change of the cell communicating with the mobile device 1 with the use of the HS-DSCH, to the mobile device 1 through the Node-B2 and the Node-B3 (by using the DCH) when the Activation Time = Now (step S214).

The mobile device 1 immediately performs the switching operation of the HS-DSCH from the cell of the Node-B2 to the cell of the Node B3 (step S215) to send the "Radio bearer reconfiguration complete" message to the RNC 4 (step S216). The RNC 4 sends the HS-DSCH release request to the Node-B2 (step S217), whereby the Node-B2 releases the HS-DSCH.

In the above HS-DSCH switching operation, the real time data is supposed to be generated at the same time. In this case, the CN 5 sends the generated data to the RNC 4 (step S218). The RNC 4 divides the data from the CN 5 into RLC UMD PDU (Radio Link Control Unacknowledged Mode Data Protocol Data Unit) (in this exemplary embodiment, three-division, for example) to send the same data to the Node-B2 and the Node-B3, respectively (steps S219 and S220).

At that time, in the step S220, after the sending in the step S219, the RNC 4 performs the data transmission to the Node-B3 with a time difference corresponding to the time required for the HS-DSCH switching operation performed by the mobile device 1 in the step S215. The Node-B2 sequentially sends the PDU 1 to 3 from the RNC 4 to the mobile device 1 with the use of the HS-DSCH (steps S221 to S223). Likewise, the Node-B3 sequentially sends the PDU 1 to 3 from the RNC 4 to the mobile device 1 with the use of the HS-DSCH (steps S224 to S226).

At that time, it is supposed that the mobile device 1 can receive the PDU in the steps S221 and S224 to S226, and could not receive the PDU in the steps S222 and S223 due to during the HS-DSCH switching operation. In this case, the mobile device 1 can judge that the PDU 1 in the step S221 and the PDU 1 in the step S224 are the same RLC PDU, whereby the RLC PDU 1 in the step S224 regarded as a duplicate RLC PDU is discarded to combine the RLC PDU 1 to 3 in the steps S221, S225 and S226, and, thus, to restore the original user data. This operation in the mobile device 1 can be realized by application of the "Duplicate avoidance and reordering" function described in "3GPP TS 25. 301 V5. 6.0, 5. 3. 2. 1 Services provided to the upper layer, September 2005", "3GPP TS 25. 322 V6. 4. 0, 4. 2. 1. 2. 2 Receiving UM RLC entity, June 2005", and "3GPP TS 25. 322 V6. 4. 0, 9. 7. 10 Duplicate avoidance and reordering for unacknowledged mode, June 2005".

After the step S217, the RNC 4 sends the "Measurement Control (Event 1D, new event)" message to the mobile device 1, which is in the "DCCH on DCH" state, through the Node-B2 and the Node-B3 (by using the DCH) in order to make the mobile device 1 start the measurement of the new event in addition to the normal Event 1D (step S218). The new event is defined as the event generated at the time when a cell having the electrical field or the quality in the range within the certain value α for the cell having the highest electrical field or the highest quality is lost.

The mobile device 1 starts the measurement of the electrical field or the quality of the cells of Node-B2 and Node-B3 (step S219). When the mobile device 1 detects that the electrical field or the quality of the Node-B3 is higher than that of the Node-B2 + α (step S220), that is, the electrical field or the quality of the pilot signal of the CPICH from the Node-B2 becomes worse enough that the electrical field or the quality of the pilot signal of the CPICH from the Node-B2 becomes out of a predetermined range for the electrical field or the quality of the pilot signal of the CPICH from the Node-B3, whereby the mobile device 1 sends the "Measurement Control (new event)" message to the RNC 4 (step S221).

In response to the occurrence of the new event, the RNC 4 sends the "Radio bearer reconfiguration" message, that releases the "DCCH on DCH" state and includes the Activation Time, to the mobile device 1 through the Node-B2 and the Node-B3 (by using the DCH) (step S222). At the same time, the RNC 4 sends a "DCH on HS-DSCH" establish request to the Node-B3 (steps S223), and sends a DCH release request to the Node-B2 (step S224).

Thereby, the Node-B2 and the Node-B3 release the DCH at the Activation time, and the Node-B3 then sends the control message to the mobile device 1 with the use of the HS-DSCH. The mobile device 1 also releases the "DCCH on DCH" state at the Activation time to perform setting so that the control message from the Node-B3 is received with the use of the HS-DSCH (step S225). When the switching from the "DCCH on DCH" state to the "DCCH on HS-DSCH" is completed, the mobile device 1 sends the "Radio bearer reconfiguration complete" message to the RNC 4 (step S226).

Needless to say, each processing operation in the mobile device 1 and the RNC 4 according to the sequence view shown in FIGS. 5 and 6 can be realized in that a program stored beforehand in a storage media such as a ROM is read out and executed by a computer, which is a CPU (control part), in the mobile device 1 and the RNC 4.

As described above, in the exemplary embodiment of the present invention, the RNC makes the Node-B as a handover destination establish the HS-DSCH in the handover in the mobile device to send the same user data from the Node-B as a handover source and the Node-B as a handover destination to the mobile device with the use of the HS-DSCH. Since the mobile device restores the user data on the basis of the data which can be received before and after the handover, the handover can be performed without deleting the user data.

In addition, in the exemplary embodiment of the present invention, the mobile device compares the electrical field or the quality between the best cell being performing the HSDPA communication and other peripheral cell. When the difference of the electrical field or the quality is not more than the threshold value α, the mobile device reports such information to the RNC by the new event. The RNC having received the report releases the "DCCH on HS-DSCH" state to make the best cell and the other peripheral cell establish the DCH, and, thus, to use the DCH in the sending of the control message. Thus, even when the best cell is changed thereafter to generate the handover, the handover can be performed without deleting the handover message.

Further, in the exemplary embodiment of the present invention, the change of the Layer 1/MAC and the Node-B of the mobile device is not required, and can be realized only by changing the software of the RRC/RLC of the mobile device and the RNC.

In the exemplary embodiment of the present invention, the new event is introduced in the step S202 of FIG. 5, and the mobile device 1 detects the generation of the new event to report the generation of the new event to the RNC 4 in the step S205. However, instead of introducing the new event, although the number of messages is increased, the electrical field or the quality of all cells which can be measured by the mobile device 1 with the use of a "Periodical reporting" message may be periodically reported to the RNC 4. In this case, the RNC 4 compares the electrical field or the quality of all the cells reported from the mobile device 1, and when the RNC 4 detects a cell (Node-B3) with the electrical field or the quality in the range within the certain value α for the best cell (Node-B2), the processing in the step S206 is performed.

Further, in the exemplary embodiment of the present invention, although the new event is introduced in the step S202 of FIG. 5, instead of introducing the new event, an Event 1F, which is an existing event generated at the time when the electrical field or the quality of the best cell is less than the absolute value, may be used. In this case, when the mobile device 1 detects that the electrical field or the quality of the best cell (Node-B2) is less than the absolute value, the mobile device 1 reports the generation of the Event 1F to the RNC 4 with the use of the "Measurement Report" message, whereby the RNC 4 performs the processing in the step S206. In the report using the "Measurement Report" message, since the mobile device 1 reports the electrical field or the quality of all cells monitored by the mobile device 1, the RNC 4 can recognize the cell (Node-B3), in which the DCH should be established in the step S207, based on the electrical field or the quality of each cell reported from the mobile device 1. The Event 1F is described in "3GPP TS 25. 331 V3. 21. 0, 14. 1. 2. 6 Reporting event 1F: A Primary CPICH becomes worse than an absolute threshold, December 2004".

Further, in the exemplary embodiment of the present invention, although the new event is introduced in the step S218 of FIG. 6, instead of introducing the new event, an Event 1E, which is an existing event generated at the time when the electrical field or the quality of the best cell is more than the absolute value, may be used. In this case, when the mobile device 1 detects that the electrical field or the quality of the best cell (Node-B3) is more than the absolute value, the mobile device 1 report the generation of the Event 1E to the RNC 4 with the use of the "Measurement Report" message, whereby the RNC 4 performs the processing in the step S222. The Event 1E is described in "3GPP TS 25. 331 V3. 21. 0, 14. 1. 2. 5 Reporting event 1E: A Primary CPICH becomes better than an absolute threshold, December 2004".

Further, although the HSDPA system can be adopted in the exemplary embodiment of the present invention, the exemplary embodiment can be applied to the next communication system using OFDM (Orthogonal Frequency Division Multiplexing) currently under consideration in addition to the HSDPA system. In the exemplary embodiment, since the macro diversity cannot be used in the OFDM, double transmission of data is performed at the time of handover, and, in addition, switching to a state where a dedicated channel is used for sending the control message is performed before handover.

### BRIEF DESCRIPTION OF THE SEVERAL VIEWS OF THE DRAWING

FIG. 1 is a sequence view showing an operation at the time of handover in the mobile communication system using an HSDPA system in the conventional art;
FIG. 2 is a view showing a configuration of a mobile communication system using the HSDPA system according to an exemplary embodiment of the present invention;
FIG. 3 is a sequence view showing another operation at the time of handover in the mobile communication system using an HSDPA system in the conventional art;
FIG. 4 is view showing a configuration of a mobile device of FIG. 2;
FIG. 5 is a sequence view showing an operation at the time of handover in the mobile communication system of FIG. 2; and
FIG. 6 is a sequence view showing an operation at the time of handover in the mobile communication system of FIG. 2.

### DESCRIPTION OF REFERENCE NUMERAL

- 1: mobile device
- 2,3: Node-B
- 4: RNC
- 5: Core Network
- 101: control part
- 102: microphone
- 103: camera
- 104: keyboard
- 105: storage device
- 106: display
- 107: speaker
- 108: radio device

## Claims

1. A mobile communication system, which performs data transmission from a base station to a mobile device with the use of an HS-DSCH (High Speed-Downlink Shared Channel), comprising:
control means that, in a handover in the mobile device, makes a base station as a handover destination establish the HS-DSCH to instruct the mobile device to perform the switching of the HS-DSCH from a base station as a handover source to the base station as a handover destination, and, thus, to send the same data from the base station as a handover source and the base station as a handover destination to the mobile device with the use of the HS-DSCH respectively.

2. The mobile communication system according to claim 1, wherein the control means sends the same data from the base station as a handover destination after a lapse of a predetermined time from the sending of the same data from the base station as a handover source.

3. The mobile communication system according to claim 2, wherein the predetermined time corresponds to a time required for the HS-DSCH switching performed by the mobile device.

4. The mobile communication system according to any one of claims 1 to 3, wherein the mobile device performs data restoration on the basis of data respectively received from the base station as a handover source and the base station as a handover destination before and after the HS-DSCH switching.

5. A mobile communication system, which performs data transmission from a base station to a mobile device with the use of an HS-DSCH (High Speed-Downlink Shared Channel) and uses the HS-DSCH also in the sending of a control message from the base station to the mobile device, comprising:
control means that stops the use of the HS-DSCH in the sending of the control message from a base station as a handover source to the mobile device beforehand, before the occurrence of handover in the mobile device, to control the base station as a handover source and the base station as a handover destination so as to make these base stations respectively establish a dedicated channel used for sending the control message to the mobile device.

6. The mobile communication system according to claim 5, wherein the mobile device includes detection means that detects a base station which sends a signal having a reception quality or an electrical field strength in a predetermined range for the reception quality or the electrical field strength of a signal from the base station as a handover source, and wherein the control means, in response to the detection of the base station performed by the detection means, performs the control on the detected base station as the base station as a handover destination.

7. The mobile communication system according to claim 5, wherein the mobile device includes means that periodically reports the reception quality or the electrical field strength of a signal from all base stations including the base station as a handover source to the control means, and wherein, when a base station, which sends a signal having the reception quality or the electrical field strength in a predetermined range for the reception quality or the electrical field strength of the signal from the base station as a handover source, is detected, the control means performs the control on the detected base station as the base station as a handover destination.

8. The mobile communication system according to claim 5, wherein the mobile device includes means that reports, to the control means, information that the reception quality or the electrical field strength of a signal from the base station as a handover source is not more than a predetermined threshold value, and wherein the control means performs the control in response to the report from the mobile device.

9. A base station controller for a mobile communication system, which performs data transmission from a base station to a mobile device with the use of an HS-DSCH (High Speed-Downlink Shared Channel), comprising:
control means that, in a handover in the mobile device, makes a base station as a handover destination establish the HS-DSCH to instruct the mobile device to perform the switching of the HS-DSCH from a base station as a handover source to the base station as a handover destination, and, thus, to send the same data from the base station as a handover source and the base station as a handover destination to the mobile device with the use of the HS-DSCH respectively.

10. The base station controller according to claim 9, wherein the control means sends the same data from the base station as a handover destination after a lapse of a predetermined time from the sending of the same data from the base station as a handover source.

11. The base station controller according to claim 10, wherein the predetermined time corresponds to a time required for the HS-DSCH switching performed by the mobile device.

12. The base station controller according to any one of claims 9 to 11, wherein the mobile device performs data restoration on the basis of data respectively received from the base station as a handover source and the base station as a handover destination before and after the HS-DSCH switching.

13. A base station controller for a mobile communication system, which performs data transmission from a base station to a mobile device with the use of an HS-DSCH (High Speed-Downlink Shared Channel) and uses the HS-DSCH also in the sending of a control message from the base station to the mobile device, comprising:
control means that stops the use of the HS-DSCH in the sending of the control message from a base station as a handover source to the mobile device beforehand, before the occurrence of handover in the mobile device, to control the base station as a handover source and a base station as a handover destination so as to make these base stations respectively establish a dedicated channel used for sending the control message to the mobile device.

14. The base station controller according to claim 13, wherein, when a base station, which sends a signal having a reception quality or an electrical field strength in a predetermined range for the reception quality or the electrical field strength of a signal in the mobile terminal from the base station as a handover source, is detected, the control means performs the control on the detected base station as the base station as a handover destination.

15. The base station controller according to claim 13, wherein, when a reception quality or the electrical field strength in the mobile device of the signal from the base station as a handover source is not more than a predetermined threshold value, the control means performs the control.

16. A mobile device for a mobile communication system, which performs data transmission from a base station to a mobile device with the use of an HS-DSCH (High Speed-Downlink Shared Channel) and includes control means that, in a handover in the mobile device, makes a base station as a handover destination establish the HS-DSCH to send the same data from a base station as a handover source and the base station as a handover destination to the mobile device with the use of the HS-DSCH respectively, being **characterized by** switching the HS-DSCH from the HS-DSCH of the base station as a handover source to the HS-DSCH of the base station as a handover destination in the handover in its own device to perform data restoration on the basis of data respectively received from the base station as a handover source and the base station as a handover destination before and after the HS-DSCH switching.

17. A mobile device for a mobile communication system, which performs data transmission from a base station to a mobile device with the use of an HS-DSCH (High Speed-Downlink Shared Channel) and uses the HS-DSCH also in the sending of a control message from the base station to the mobile device, and includes control means that, in response to a notification from the mobile device, stops the use of the HS-DSCH in the sending of the control message from a base station as a handover source to the mobile device beforehand, before the occurrence of handover in the mobile device, to control the base station as a handover source and a base station as a handover destination so as to make these base stations respectively establish a dedicated channel used for sending the control message to the mobile device, being **characterized by** detecting a base station, which sends a signal having a reception quality or an electrical field strength in a predetermined range for a reception quality or an electrical field strength of a signal from the base station as a handover source, to perform the notification.

18. The mobile device according to claim 17, being **characterized by** periodically reporting the reception quality or the electrical field strength of a signal from all base stations including the base station as a handover source to the control means, instead of performing the notification, to make the control means detect a base station which sends a signal having a reception quality or an electrical field strength in a predetermined range for the reception quality or the electrical field strength of a signal from the base station as a handover source.

19. The mobile device according to claim 17, being **characterized by** performing the notification when the reception quality or the electrical field strength of a signal from the base station as a handover source is not more than a predetermined threshold value.

20. A handover control method in a mobile communication system, which performs data transmission from a base station to a mobile device with the use of an HS-DSCH (High Speed-Downlink Shared Channel), comprising:
a control step which, in a handover in the mobile device, makes a base station as a handover destination establish the HS-DSCH to instruct the mobile device to perform the switching of the HS-DSCH from a base station as a handover source to the base station as a handover destination, and, thus, to send the same data from the base station as a handover source and the base station as a handover destination to the mobile device with the use of the HS-DSCH respectively.

21. The handover control method according to claim 20, wherein the control step sends the same data from the base station as a handover destination after a lapse of a predetermined time from the sending of the same data from the base station as a handover source.

22. The handover control method according to claim 21, wherein the predetermined time corresponds to a time required for the HS-DSCH switching performed by the mobile device.

23. The handover control method according to any one of claims 20 to 22, wherein the mobile device performs data restoration on the basis of data respectively received from the base station as a handover source and the base station as a handover destination before and after the HS-DSCH switching.

24. A handover control method in a mobile communication system, which performs data transmission from a base station to a mobile device with the use of an HS-DSCH (High Speed-Downlink Shared Channel) and uses the HS-DSCH also in the sending of a control message from the base station to the mobile device, comprising:
a control step which stops the use of the HS-DSCH in the sending of the control message from a base station as a handover source to the mobile device beforehand, before the occurrence of handover in the mobile device, to control the base station as a handover source and the base station as a handover destination so as to make these base stations respectively establish a dedicated channel used for sending the control message to the mobile device.

25. The handover control method according to claim 24, further comprising a detection step which, in the mobile device, detects a base station which sends a signal having a reception quality or an electrical field strength in a predetermined range for the reception quality or the electrical field strength of a signal from the base station as a handover source, and wherein the control step, in response to the detection of the base station in the detection step, performs the control on the detected base station as the base station as a handover destination.

26. The handover control method according to claim 24, further comprising a step which, in the mobile device, periodically reports the reception quality or the electrical field strength of a signal from all base stations including the base station as a handover source, and wherein, when a base station, which sends a signal having the reception quality or the electrical field strength in a predetermined range for the reception quality or the electrical field strength of the signal from the base station as a handover source, is detected, the control step performs the control on the detected base station as the base station as a handover destination.

27. The handover control method according to claim 24, further comprising a step which, in the mobile device, reports that the reception quality or the electrical field strength of a signal from the base station as a handover source is not more than a predetermined threshold value, and wherein the control step performs the control in response to the report from the mobile device.

28. A program for making a computer execute a handover control method in a base station controller for a mobile communication system, which performs data transmission from a base station to a mobile device with the use of an HS-DSCH (High Speed-Downlink Shared Channel), comprising:
processing that, in a handover in the mobile device, makes a base station as a handover destination establish the HS-DSCH to instruct the mobile device to perform the switching of the HS-DSCH from a base station as a handover source to the base station as a handover destination, and, thus, to send the same data from the base station as a handover source and the base station as a handover destination to the mobile device with the use of the HS-DSCH respectively.

29. A program for making a computer execute a handover control method in a base station controller for a mobile communication system, which performs data transmission from a base station to a mobile device with the use of an HS-DSCH (High Speed-Downlink Shared Channel) and uses the HS-DSCH also in the sending of a control message from the base station to the mobile device, comprising:
processing that stops the use of the HS-DSCH in the sending of the control message from a base station as a handover source to the mobile device beforehand, before the occurrence of handover in the mobile device, to make the base station as a handover source and a base station as a handover destination respectively establish a dedicated channel used for sending the control message to the mobile device.

30. A program for making a computer execute a handover control method in a mobile device for a mobile communication system, which performs data transmission from a base station to a mobile device with the use of an HS-DSCH (High Speed-Downlink Shared Channel) and includes control means that, in a handover in the mobile device, makes a base station as a handover destination establish the HS-DSCH to send the same data from a base station as a handover source and the base station as a handover destination to the mobile device with the use of the HS-DSCH respectively, comprising:
processing that switches from the HS-DSCH of the base station as a handover source to the HS-DSCH of the base station as a handover destination in the handover in its own device to perform data restoration on the basis of data respectively received from the base station as a handover source and the base station as a handover destination before and after the HS-DSCH switching.

31. A program for making a computer execute a handover control method in a mobile device for a mobile communication system, which performs data transmission from a base station to a mobile device with the use of an HS-DSCH (High Speed-Downlink Shared Channel), uses the HS-DSCH also in the sending of a control message from the base station to the mobile device, and includes control means that, in response to a notification from the mobile device, stops the use of the HS-DSCH in the sending of the control message from a base station as a handover source to the mobile device beforehand, before the occurrence of handover in the mobile device, to control the base station as a handover source and a base station as a handover destination so as to make these base stations respectively establish a dedicated channel used for sending the control message to the mobile device, comprising:
processing that detects a base station, which sends a signal having a reception quality or an electrical field strength in a predetermined range for a reception quality or an electrical field strength of a signal from the base station as a handover source, to perform the notification.

## Amended claims

### Amended claims under Art. 19.1 PCT

**1.** (Amended) A mobile communication system, which performs data transmission from a base station to a mobile device with the use of an HS-DSCH (High Speed-Downlink Shared Channel), comprising:
control means that, in a handover in the mobile device, sends the same data from a base station as a handover source and a base station as a handover destination to the mobile device with the use of the HS-DSCH respectively.

**2.** (Amended) The mobile communication system according to claim 1, wherein the control means makes the base station as a handover destination establish the HS-DSCH in the handover in the mobile device to instruct the mobile device to perform the switching of the HS-DSCH from the base station as a handover source to the base station as a handover destination.

**3.** (Amended) The mobile communication system according to claim 1 or 2, wherein the control means sends the same data from the base station as a handover destination after a lapse of a predetermined time from the sending of the same data from the base station as a handover source.

**4.** (Amended) The mobile communication system according to claim 3, wherein the predetermined time corresponds to a time required for the HS-DSCH switching performed by the mobile device.

**5.** (Amended) The mobile communication system according to any one of claims 1 to 4, wherein the mobile device performs data restoration on the basis of data respectively received from the base station as a handover source and the base station as a handover destination before and after the HS-DSCH switching.

**6.** (Amended) A mobile communication system, which performs data transmission from a base station to a mobile device with the use of an HS-DSCH (High Speed-Downlink Shared Channel) and uses the HS-DSCH also in the sending of a control message from the base station to the mobile device, comprising:
control means that stops the use of the HS-DSCH in the sending of the control message from a base station as a handover source to the mobile device beforehand, before the occurrence of handover in the mobile device, to control the base station as a handover source and a base station as a handover destination so as to make these base stations respectively establish a dedicated channel used for sending the control message to the mobile device.

**7.** (Amended) The mobile communication system according to claim 6, wherein the mobile device includes detection means that detects a base station which sends a signal having a reception quality or an electrical field strength in a predetermined range for the reception quality or the electrical field strength of a signal from the base station as a handover source, and wherein the control means, in response to the detection of the base station performed by the detection means, performs the control on the detected base station as the base station as a handover destination.

**8.** (Amended) The mobile communication system according to claim 6, wherein the mobile device includes means that periodically reports the reception quality or the electrical field strength of a signal from all base stations including the base station as a handover source to the control means, and wherein, when a base station, which sends a signal having a reception quality or an electrical field strength in a predetermined range for the reception quality or the electrical field strength of the signal from the base station as a handover source, is detected, the control means performs the control on the detected base station as the base station as a handover destination.

**9.** (Amended) The mobile communication system according to claim 6, wherein the mobile device includes means that reports to the control means, information that the reception quality or the electrical field strength of a signal from the base station as a handover source is not more than a predetermined threshold value, and wherein the control means performs the control in response to the report from the mobile device.

**10.** (Amended) A base station controller for a mobile communication system, which performs data transmission from a base station to a mobile device with the use of an HS-DSCH (High Speed-Downlink Shared Channel), comprising:
control means that, in a handover in the mobile device, sends the same data from a base station as a handover source and a base station as a handover destination to the mobile device with the use of the HS-DSCH respectively.

**11.** (Amended) The base station controller according to claim 10, wherein the control means makes the base station as a handover destination establish the HS-DSCH in the handover in the mobile device to instruct the mobile device to perform the switching of the HS-DSCH from the base station as a handover source to the base station as a handover destination.

**12.** (Amended) The base station controller according to claim 10 or 11, wherein the control means sends the same data from the base station as a handover destination after a lapse of a predetermined time from the sending of the same data from the base station as a handover source.

**13.** (Amended) The base station controller according to claim 12, wherein the predetermined time corresponds to a time required for the HS-DSCH switching performed by the mobile device.

**14.** (Amended) The base station controller according to any one of claims 10 to 13, wherein the mobile device performs data restoration on the basis of data respectively received from the base station as a handover source and the base station as a handover destination before and after the HS-DSCH switching.

**15.** (Amended) A base station controller for a mobile communication system, which performs data transmission from a base station to a mobile device with the use of an HS-DSCH (High Speed-Downlink Shared Channel) and uses the HS-DSCH also in the sending of a control message from the base station to the mobile device, comprising:
control means that stops the use of the HS-DSCH in the sending of the control message from a base station as a handover source to the mobile device beforehand, before the occurrence of handover in the mobile device, to control the base station as a handover source and a base station as a handover destination so as to make these base stations respectively establish a dedicated channel used for sending the control message to the mobile device.

**16.** (Amended) The base station controller according to claim 15, wherein, when a base station, which sends a signal having a reception quality or an electrical field strength in a predetermined range for the reception quality or the electrical field strength of a signal in the mobile device from the base station as a handover source, is detected, the control means performs the control on the detected base station as the base station as a handover destination.

**17.** (Amended) The base station controller according to claim 15, wherein, when the reception quality or the electrical field strength in the mobile device of a signal from the base station as a handover source is not more than a predetermined threshold value, the control means performs the control.

**18.** (Amended) A mobile device for a mobile communication system, which performs data transmission from a base station to a mobile device with the use of an HS-DSCH (High Speed-Downlink Shared Channel) and includes control means that, in a handover in the mobile device, makes a base station as a handover destination establish the HS-DSCH to send the same data from a base station as a handover source and the base station as a handover destination to the mobile device with the use of the HS-DSCH respectively, being **characterized by** switching the HS-DSCH from the HS-DSHC of the base station as a handover source to the HS-DSCH of the base station as a handover destination in the handover in its own device to perform data restoration on the basis of data respectively received from the base station as a handover source and the base station as a handover destination before and after the HS-DSCH switching.

**19.** (Amended) A mobile device for a mobile communication system, which performs data transmission from a base station to a mobile device with the use of an HS-DSCH (High Speed-Downlink Shared Channel) and uses the HS-DSCH also in the sending of a control message from the base station to the mobile device, and includes control means that, in response to a notification from the mobile device, stops the use of the HS-DSCH in the sending of the control message from a base station as a handover source to the mobile device beforehand, before the occurrence of handover in the mobile device, to control the base station as a handover source and a base station as a handover destination so as to make these base stations respectively establish a dedicated channel used for sending the control message to the mobile device, being **characterized by** detecting a base station, which sends a signal having a reception quality or an electrical field strength in a predetermined range for a reception quality or an electrical field strength of a signal from the base station as a handover source, to perform the notification.

**20.** (Amended) The mobile device according to claim 19, being **characterized by** periodically reporting the reception quality or the electrical field strength of a signal from all base stations including the base station as a handover source to the control means, instead of performing the notification, to make the control means detect a base station which sends a signal having a reception quality or an electrical field strength in a predetermined range for the reception quality or the electrical field strength of a signal from the base station as a handover source.

**21.** (Amended) The mobile device according to claim 19, being **characterized by** performing the notification when the reception quality or the electrical field strength of a signal from the base station as a handover source is not more than a predetermined threshold value.

**22.** (Amended) A handover control method in a mobile communication system, which performs data transmission from a base station to a mobile device with the use of an HS-DSCH (High Speed-Downlink Shared Channel), comprising:
a control step which, in a handover in the mobile device, sends the same data from a base station as a handover source and a base station as a handover destination to the mobile device with the use of the HS-DSCH respectively.

**23.** (Amended) The handover control method according to claim 22, wherein the control means makes the base station as a handover destination establish the HS-DSCH in the handover in the mobile device to instruct the mobile device to perform the switching of the HS-DSCH from the base station as a handover source to the base station as a handover destination.

**24.** (Amended) The handover control method according to claim 22 or 23, wherein the control step sends the same data from the base station as a handover destination after a lapse of a predetermined time from the sending of the same data from the base station as a handover source.

**25.** (Amended) The handover control method according to claim 24, wherein the predetermined time corresponds to a time required for the HS-DSCH switching performed by the mobile device.

**26.** (Amended) The handover control method according to any one of claims 22 to 25, wherein the mobile device performs data restoration on the basis of data respectively received from the base station as a handover source and the base station as a handover destination before and after the HS-DSCH switching.

**27.** (Amended) A handover control method in a mobile communication system, which performs data transmission from a base station to a mobile device with the use of an HS-DSCH (High Speed-Downlink Shared Channel) and uses the HS-DSCH also in the sending of a control message from the base station to the mobile device, comprising:
a control step which stops the use of the HS-DSCH in the sending of the control message from a base station as a handover source to the mobile device beforehand, before the occurrence of handover in the mobile device, to control the base station as a handover source and a base station as a handover destination so as to make these base stations respectively establish a dedicated channel used for sending the control message to the mobile device.

**28.** (Amended) The handover control method according to claim 27, further comprising a detection step which, in the mobile device, detects a base station which sends a signal having a reception quality or an electrical field strength in a predetermined range for the reception quality or the electrical field strength of a signal from the base station as a handover source, and wherein the control step, in response to the detection of the base station in the detection step, performs the control on the detected base station as the base station as a handover destination.

**29.** (Amended) The handover control method according to claim 27, further comprising a step which, in the mobile device, periodically reports the reception quality or the electrical field strength of a signal from all base stations including the base station as a handover source, and wherein, when a base station, which sends a signal having the reception quality or the electrical field strength in a predetermined range for the reception quality or the electrical field strength of the signal from the base station as a handover source, is detected, the control step performs the control on the detected base station as the base station as a handover destination.

**30.** (Amended) The handover control method according to claim 27, further comprising a step which, in the mobile device, reports that the reception quality or the electrical field strength of a signal from the base station as a handover source is not more than a predetermined threshold value, and wherein the control step performs the control in response to the report from the mobile device.

**31.** (Amended) A program for making a computer execute a handover control method in a base station controller for a mobile communication system, which performs data transmission from a base station to a mobile device with the use of an HS-DSCH (High Speed-Downlink Shared Channel), comprising:
processing that, in a handover in the mobile device, sends the same data from a base station as a handover source and a base station as a handover destination to the mobile device with the use of the HS-DSCH respectively.

**32.** (Added) The program according to claim 31, being **characterized by**, in the processing, making the base station as a handover destination establish the HS-DSCH in the handover in the mobile device to instruct the mobile device to perform the switching of the HS-DSCH from the base station as a handover source to the base station as a handover destination.

**33.** (Added) A program for making a computer execute a handover control method in a base station controller for a mobile communication system, which performs data transmission from a base station to a mobile device with the use of an HS-DSCH (High Speed-Downlink Shared Channel) and uses the HS-DSCH also in the sending of a control message from the base station to the mobile device, comprising:
processing that stops the use of the HS-DSCH in the sending of the control message from a base station as a handover source to the mobile device beforehand, before the occurrence of handover in the mobile device, to make the base station as a handover source and a base station as a handover destination respectively establish a dedicated channel used for sending the control message to the mobile device.

**34.** (Added) A program for making a computer execute a handover control method in a mobile device for a mobile communication system, which performs data transmission from a base station to a mobile device with the use of an HS-DSCH (High Speed-Downlink Shared Channel) and includes control means that, in a handover in the mobile device, makes a base station as a handover destination establish the HS-DSCH to send the same data from a base station as a handover source and the base station as a handover destination to the mobile device with the use of the HS-DSCH respectively, comprising:
processing that switches from the HS-DSCH of the base station as a handover source to the HS-DSCH of the base station as a handover destination in the handover in its own device to perform data restoration on the basis of data respectively received from the base station as a handover source and the base station as a handover destination before and after the HS-DSCH switching.

**35.** (Added) A program for making a computer execute a handover control method in a mobile device for a mobile communication system, which performs data transmission from a base station to a mobile device with the use of an HS-DSCH (High Speed-Downlink Shared Channel), uses the HS-DSCH also in the sending of a control message from the base station to the mobile device, and includes control means that, in response to a notification from the mobile device, stops the use of the HS-DSCH in the sending of the control message from a base station as a handover source to the mobile device beforehand, before the occurrence of handover in the mobile device, to control the base station as a handover source and a base station as a handover destination so as to make these base stations respectively establish a dedicated channel used for sending the control message to the mobile device, comprising:
processing that detects a base station, which sends a signal having a reception quality or an electrical field strength in a predetermined range for a reception quality or an electrical field strength of a signal from the base station as a handover source, to perform the notification.

Statement under Art. 19.1 PCT
The original claim 1 has been amended into new claims 1 and 2. The original claim 9 has been amended into new claims 10 and 11. The original claim 20 has been amended into new claims 22 and 23. The original claim 28 has been amended into new claims 31 and 32.

The remaining claims are sequentially numbered in accordance with the above amendments.
